# EUROPEAN PATENT APPLICATION

(11) **EP 1 555 820 A1**
(43) Date of publication of application: **20.07.2005**
(21) Application number: 05100095.8
(22) Date of filing: 10.01.2005
(51) Int. Cl.: H04N 7/16, H04N 5/765, H04N 5/781

(54) **Digital memory device**

(30) Priority: 13.01.2004 IE 20040018
(71) Applicant: R&D Technology Limited, Dublin 12 (IE)
(72) Inventor: Menna Valerio, Domenico Tommaso, 00128 Rome (IT)
(74) Representative: Papa, Elisabetta

(57) **Abstract**

A portable digital memory device (1), comprising: a video-archive (2) for storing video data corresponding to a plurality of videos; multiple connecting terminals (4) for connecting the device to a reading apparatus (100) which allows visualization of the videos stored in the video-archive (2) to the end-user; and a control unit (3), having a memory (31) pre-set for memorizing data concerning the videos visualized by the end-user and means (32) for allowing access to said data only to an authorized operator.

## Description

The present invention relates to a digital memory device comprising a video-archive unit.

Renting home-videos from specialized stores is very common nowadays. Also due to the increasing popularity of this form of entertainment and to the commercial growths associated therewith, a continuos technological development has been observed in the field. In particular, in the last decade visualization facilities of enhanced quality, such as those based on the DVD technology, have been introduced.

However, while the bulk of the improvement efforts has been focused upon the enhancement of the video reproduction quality, e.g. image definition and sound clearness, little developments have occurred on the side of the simplification of the procedures for video shipment from the home-video renting store to the end-users and for the consequent billing.

Therefore, the present invention is based upon the recognition of such shortfall in the prior art, and on the position of the corresponding technical problem of proving a video shipment facility more efficient and simplified with respect to the prior art for both the renting store and the clients thereof.

The above technical problem is solved by a digital memory device according to claim 1 and by an associated reading apparatus according to claim 8.

Preferred embodiments of the present invention are provided in the dependent claims.

The present invention has several advantages. The main advantage lies in the fact that the device of the invention allows an easy video storage and shipment from the renting store to the end-user, and an associated simplified billing. In fact, the end-user can bring home the device, watch the video(s) he/she prefers among those stored in the video-archive unit and then bring back the device to the renting store. Here, the store personnel can bill the client for the amounts corresponding to the watched videos simply by accessing the corresponding data memorized in the control unit.

Other advantages, features and the modes of employ of the present invention will be made apparent in the following detailed description of some embodiments thereof, given by way of example and not for limitative purposes. It will be made reference to the figures of the annexed drawings, wherein:
Fig. 1 shows perspective view of one embodiment of the device of the invention; and
Fig. 2 shows a schematic block-diagram representation of the device of Fig. 1.

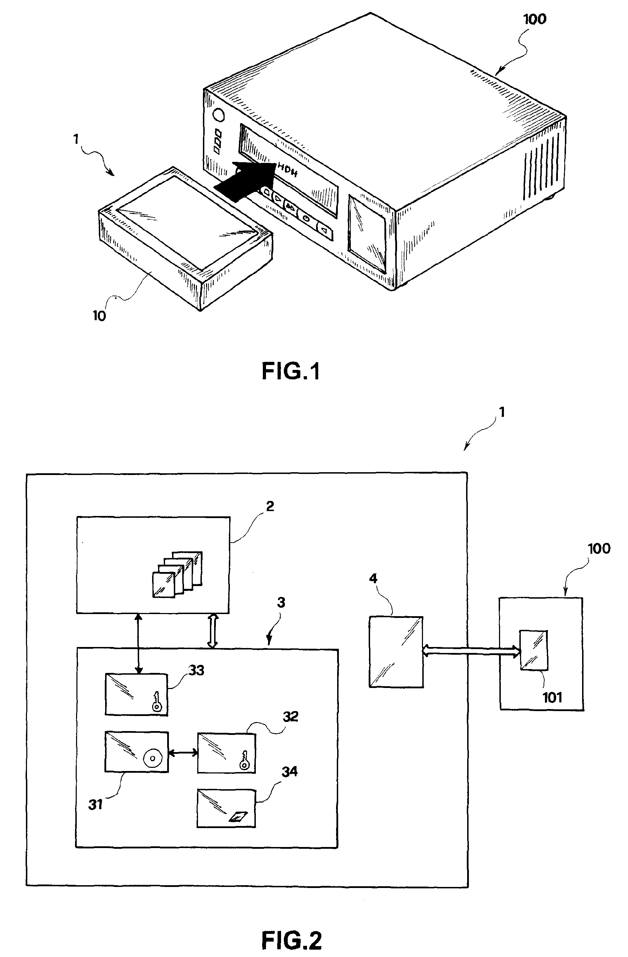

With initial reference to Fig. 1, a portable digital memory device according to one embodiment of the invention is globally denoted by 1.

Device 1 comprises an outer case 10, which in the present embodiment has a substantially cubical or parallelepipedal shape, at the inside of which the other components of device 1 schematically represented in Fig. 2 are arranged.

With reference to this latter figure, device 1 comprises a video-archive unit 2 apt to store video data corresponding to a plurality of videos, in the present example a plurality of movies.

Always in the present example, the archive-unit 2 is a digital mass memory of the read-and-write type, which can be implemented by any of the technologies available in the field. For example, it can be a rigid memory having a capacity of 100 Gb and apt to allow storage of video streamings, for example movies for 40 hours or 26 movies each of 3,8 Gb with resolution of 720x576 at 25 frames per second and audio with rate of 48.000 and format 16 stereo, i.e. with a DVD-type quality.

Device 1 comprises also a control unit 3 communicating with the video-archive unit 2. The control unit 3, in its turn, comprises dedicated memory means 31 pre-set for memorizing data concerning the videos visualized by the end-user and means 32 for allowing access to said data only to an authorized operator. More specifically, the control unit 3 is apt to generate a list of the movies visualized by the end-user, to store such list, for example in a text format, in the memory means 31 and, thanks to the means 32, to allow access to said data to the renting store personnel only. Means 32 can be implemented by conventional techniques, for example be based on access codes.

The control unit 3 is also apt to allow a selective access to the video-archive memory unit 2. To this aim, control unit 3 preferably comprises selective access means 33 apt to allow visualization of the videos stored in the video-archive unit 2 only upon provision of an access code.

Access means 33 can also be pre-arranged so as to allow a visualization of the videos stored in the video-archive unit 2 which is restricted in terms of video number, type and/or visualization times. Such selective visualization of the videos stored in the video-archive unit 2 can also be implemented so that the allowed video number, type and/or visualization times are dependent upon the type of access code provided.

Typically, the access means 33 comprises a smart card reader 34, for example of the type apt to read a Gold Wafer Smart Card.

Preferably, access means 33 are also preset so as to impede copying of the video stored in archive unit 2.

In the present example, the control unit 3 is implemented by an integrated processor having a resident firmware apt to manage the files, i.e. the video streamings stored in the archive-unit 2, according to a predetermined procedure.

Device 1 comprises also interface means 4, which can be partially or totally incorporated in the control unit 3 and which are apt to allow connection of the device 1 itself to a reading apparatus which will be described in the following paragraph. Typically, interface means 4 comprises multiple connecting terminals possibly shielded by a slidable or turnable flap.

In order to allow an end-user to visualize one or more of the videos stored in the video-archive unit 2, the device 1 has to be connected, through the interface means 4, to the aforementioned reading apparatus, denoted by 100 and schematically depicted in both Fig. 1 and Fig. 2.

The apparatus 100 comprises respective apparatus interface means 101 apt to allow its connection to the device 1. Apparatus 1 can also provide a dedicated housing for receiving the device 1.

Furthermore, it will be understood that the access means 33 which has been described above as incorporated in device 1 can alternatively or additionally be provided also in apparatus 100.

Apparatus 100 can be implemented as a TV decoder apt to release video streamings having broadcast definition and quality.

Device 1 and/or apparatus 100 can also have security means apt to prevent exchanges of the same device 1 between different end-users.

As all the components introduced so far can be implemented by conventional hardware and/or software means immediately evident for a person skilled in the art, they will not be described in further detail.

The modes of employ of the invention will have been already understood at this stage. Device 1, storing an archive of movies in its unit 2, can be supplied by an home-video renting store to a client. The client takes device 1 at home, connects it to his/her apparatus 100 by the respective interface means 4 and 101, and watches all the movies he/she selects among those memorized in unit 2 and for which he/she is authorized on the basis of his/her smart card.

Then, the client brings back device 1 to the home-video store, where the personnel access the memory means 31 of the control unit 3 and bill the client according to the number, type and times of movies watched.

It will be understood that, although the device of the invention has been described sofar as referred to the storage of movies, it can be advantageously be used also for other purposes, and specifically for the storage of video data of other nature.

The present invention has been hereto described with reference to preferred embodiments thereof. It is understood that other embodiments might exist, all falling within the concept of the same invention, and all comprised within the protective scope of the claims hereinafter.

## Claims

1. A portable digital memory device (1), comprising:
- a video-archive unit (2), apt to store video data corresponding to a plurality of videos;
- interface means (4), apt to allow connection of the device to a reading apparatus (100) which allows visualization of one or more of the videos stored in the video-archive unit (2) to an end-user; and
- a control unit (3), having memory means (31) pre-set for memorizing data concerning the videos visualized by the end-user and means (32) for allowing access to said data only to an authorized operator.

2. The device (1) according to claim 1, wherein said control unit (3) is apt to generate a list of the videos visualized by the end-user and to store such list by said memory means (31).

3. The device (1) according to claim 1 or 2, wherein said control unit (3) comprises selective access means (33) apt to allow visualization of the videos stored in said video-archive unit (2) only upon provision of an access code.

4. The device (1) according to the preceding claim, wherein said selective access means (33) is apt to allow a visualization of the videos stored in said video-archive unit (2) which is restricted in terms of video number, type and/or visualization times.

5. The device (1) according to the preceding claim, wherein said access means (33) is apt to allow said restricted visualization of the videos stored in said video-archive unit (2) depending upon the type of access code provided.

6. The device according to any of claims 3 to 5, wherein said access means (33) comprises a smart card reader (34).

7. The device (1) according to any one of the preceding claims, wherein said video-archive unit (2) is of the read and write type.

8. A reading apparatus (100) comprising apparatus interface means (101) apt to allow connection of the apparatus itself to a device (1) according to any one of the preceding claims.

9. The apparatus (100) according to the preceding claim, comprising selective access means apt to allow visualization of the videos stored in said video-archive unit (2) of said device (1) only upon provision of an access code.

10. The apparatus (100) according to the preceding claim, wherein said selective access means is apt to allow a visualization of the videos stored in said video-archive unit (2) of said device (1) which is restricted in terms of video number, type and/or visualization times.

11. The apparatus (100) according to the preceding claim, wherein said access means is apt to allow said restricted visualization of the videos stored in said video-archive unit (2) of said device (1) depending upon the type of access code provided.

12. The apparatus (100) according to any of claims 9 to 11, wherein said access means (33) comprises a smart card reader.
